# EUROPEAN PATENT SPECIFICATION

(11) **EP 1 544 865 B1**
(45) Date of publication and mention of the grant of the patent: **14.02.2007**
(21) Application number: 04447272.8
(22) Date of filing: 10.12.2004
(51) Int. Cl.: G12B 21/02, G01N 27/00

(54) **A method for making probes for atomic force microscopy**
Verfahren zur Herstellung von Sonden für Atomkraftmikroskopie
Procédé de fabrication de sondes pour microscopie à force atomique

(30) Priority: 17.12.2003 EP 03447294
(43) Date of publication of application: 22.06.2005
(73) Proprietor: Interuniversitair Micro-Elektronica Centrum (IMEC), 3001 Heverlee (BE)
(72) Inventor: Fouchier, Marc, 3000 Leuven (BE)
(74) Representative: Van Malderen, Joëlle

(56) References cited:
- EP-A- 1 189 016
- EP-A- 1 202 047
- WO-A-94/18697
- US-B1- 6 215 137
- PH. NIEDERMANN ET AL.: "CVD Diamond probes for nanotechnology" APPLIED PHYSICS A: MATERIALS SCIENCE & PROCESSING, vol. 66, 1998, pages s31-s34, XP002274350

## Description

### Field of the invention

The present invention is related to probes for Atomic Force Microscopy (AFM). Such a probe consists of a probe tip, a cantilever and a probe holder chip. The invention is related to a method for manufacturing a probe of this type.

### State of the art

Atomic Force Microscopy is a well established surface analysis technique for analysing the topography and electrical characteristics of semiconductor samples. The technique involves the use of a moving probe in contact with the surface under analysis. An AFM probe generally consists of a cantilever, a tip at one end of the cantilever and a holder at the other end. The holder is a large body of material used to handle the probe and is preferably located at the opposite side of the probe tip, i.e. at the side pointing in the opposite direction of the tip, this to prevent the holder from touching the sample's surface.

A first type of probe, having a silicon tip, manufactured by Si bulk micromachining, is known in the art.

The kind of probe to which the invention is related has a tip that is moulded into a silicon substrate. This is illustrated for example in document US-A-5399232. Of this type, probes with silicon nitride tip and cantilever are the most common. In all cases of this kind, the tip is pointing inwards towards the substrate. The holder can be attached by anodic bonding, or by adhesive, eutectic or solder bonding. It can be formed above the wafer by plating or out of thick resist. Often, a full glass wafer is bonded and then diced on the substrate to form individual holders.

In any event, when making a probe with a moulded tip, it is necessary to release the probe from the substrate. The best known way to do this is to etch back all or a part of the silicon substrate from the back side, as described in US-A-5399232. However, this approach suffers from a number of disadvantages, most important of which are the long release time and the important loss of material by etching the entire thickness of the substrate.

Another technique involves the peeling off of the probe, followed by the attachment of the holder, such as disclosed for example in EP-A-1202047. This is however a slow manual process. Also, inherent to the difficult process of bonding a holder to the probe after peel-off, the risk of breaking the probe is important. Finally, when applying this process, the holders must be attached one by one. Dicing a substrate above a number of peeled-off probes is not possible, because of the mechanical stress that would be applied to the holder-substrate, and the subsequent risk of damage to the probes.

In the already cited EP-A-1202047, the probe tip and cantilever are underetched prior to peel-off, but the rest of the probe structure, particularly the part on which the holder is to be attached is too large to be fully underetched. This has also made it impossible so far to release the probe from the front side after bonding or forming of a holder. No sacrificial layer has been found to be really practical for release under a 1.5X3mm holder piece. Either the etch rate is too slow or the release chemical is overly harmful to the probe. Underetching the Si wafer under the probe is not an option either, since Si is etched slowly in KOH or another anisotropic etchant. Even when the probe is oriented along the fast underetched <100> direction, which is normally not the case, such an underetch would be slow and it is probable that the substrate is etched through before the underetch is complete. In order to reduce the underetching time of a sacrificial layer, it is known to produce small holes in the microfabricated structure to be released. However, this has so far not been done for a complete AFM probe, including the attached holder.

Another example of top side release of a probe before holder attachment, in this case a diamond probe is to be found in 'CVD diamond probes for nanotechnology', Niedermann et al., Appl. Phys. A66, S31-S34 (1998). In this case, the film comprising the cantilever forms a pattern that is mostly in the <100> direction although the probe including the cantilever is still oriented in the general <110> direction. An example of front side release of patterned microstructures by underetching the Si substrate in isotropic etchant can be found in WO-A-9418697. In this case the pattern does not need to be rotated in the <100> direction Document US-A-6215137 is related to a probe with a thermocouple made of a joint between a first metal material and a second metal material. To release the probes, etching from the backside of the substrate is performed.
Document EP-A-1189016 is related to a soldering procedure, for mounting a probe to a holder chip, after the substrate carrying the probe has been etched from the backside of the substrate.

### Aims of the invention

The present invention aims to provide a method for producing probes with a moulded tip, which does not suffer from the disadvantages of the prior art.

### Summary of the invention

The present invention is related to a method and a product having the characteristics described in the appended independent claims 1 and 10. Preferred embodiments are subject of the dependent claims.

### Short description of the drawings

Fig. 1a represents in top view a preferred embodiment of a probe configuration used in the method of the invention. Figures 1b and 1c represent sectioned views of two alternatives, respectively with or without a sacrificial layer.

Fig. 2 represents another probe configuration according to the invention.

Fig. 3 and 4 represent probe configurations with three probe tips.

Fig. 5 represents the way in which a holder substrate may be diced after attachment.

Fig. 6a to 6c represents ways of increasing the gap between the holder and the substrate.

Fig. 7 represents an alternative, involving a plated holder.

Fig. 8 represents another alternative, involving a holder comprising holes through the thickness.

### Detailed description of the invention

The method of the invention comprises firstly a number of steps which are known from the prior art :
- providing a semiconductor substrate, preferably a Si substrate,
- producing on the surface of one side of the substrate, one or more moulds in the substrate. A mould is preferably a pyramidal pit, produced for example by the use of a hard mask, and an anisotropic etch, usually in KOH,
- optionally, applying a tip material, for example a metal, a hardmetal, a metal oxide, a ceramic or diamond. This is done when the tip material is different from the cantilever material.
- optionally, patterning the tip material. In some cases, the patterning can be done prior to the tip material deposition. In this case, a material is deposited and patterned. The tip material is then deposited selectively, See C. Mihalcea et Al, Appl. Phys. A 66, S87-S90 or W. Hanni et Al, Thin Solid Films 236, 87-90 (1993).
- Creating a probe configuration on the surface at the side of the mould, comprising a contact region for attachment of a holder, and at least one set of a probe tip and a cantilever. Different ways of creating such a probe configuration can be applied, as described further in this description. More than one probe configuration may be created simultaneously.
- attaching a holder to said contact region(s).
According to the invention, the surface area of the contact region is smaller in size than the surface area of the holder region which is to be attached to said contact region. The probe configuration is then under-etched from the front side of the substrate, i.e. the side on which the probe configuration is made, after the step of attaching a holder. The under-etch is followed by the removal of the structure consisting of said holder and said probe configuration, attached to the holder. The advantage of underetching from the side carrying the probe configuration and to which a holder is attached (frontside surface) is evident with respect to the prior art applications where the etching takes place from the opposite (back) side : the etching step takes place quicker and with less loss of material. At the same time, due to the contact region being smaller than the holder region, the underetch can take place without the difficulties in prior art applications, where a large area had to be underetched. An additional advantage of having the holder attached prior to the underetching of the probe configuration is that the probe configuration can be better manipulated during and after the release step thanks to the presence of this holder.

According to the preferred embodiment, the probe configuration is made in such a way that the contact region consists of one or more separate, elevated bonding pads, the total surface of these pads being smaller than the surface area of the holder region which is to be attached to these pads. The holder is then attached to these pads, by a known technique, for example bonding or soldering.

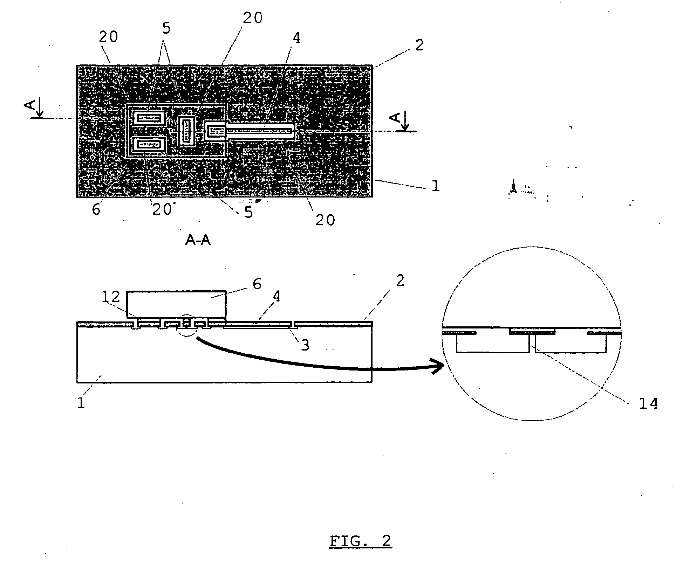

After this, the probe and holder are separated from the substrate by underetching with a release chemical from the front side of the substrate. The contact region can be fully underetched due to the reduced size of this contact region. The height of the pads must be sufficient to allow the release chemical to flow underneath the attached holder, into a gap formed between the holder and the substrate. The difference in size between the contact region and the holder needs to be sufficient in order to allow the creation of said gap over a large area of the substrate surface which is covered by the holder. In one specific embodiment, the pads are only surrounded by a gutter, and the gap is formed by the thickness of a bonding layer attached to the pads (see fig. 2).

Optionally, a sacrificial layer may be applied before creating the probe configuration. Such a sacrificial layer will facilitate the release.

Figure 1a illustrates a preferred embodiment of the invention. It shows a top view of the substrate 1 wherein the probe configuration is equally visible. This configuration comprises the probe tip 3 (possibly made of a different material than the probe layer), the cantilever 4 and the contact region, comprising four bonding pads 5. The large rectangle indicates the place where the holder 6 will be placed. The part 7 of the cantilever which is to be covered by the holder, can be viewed as a fifth bonding pad. The bonding pads 5 and 7 thereby define the contact region. In this embodiment, the probe configuration is produced by applying a probe layer 2, and subsequently patterning this layer.

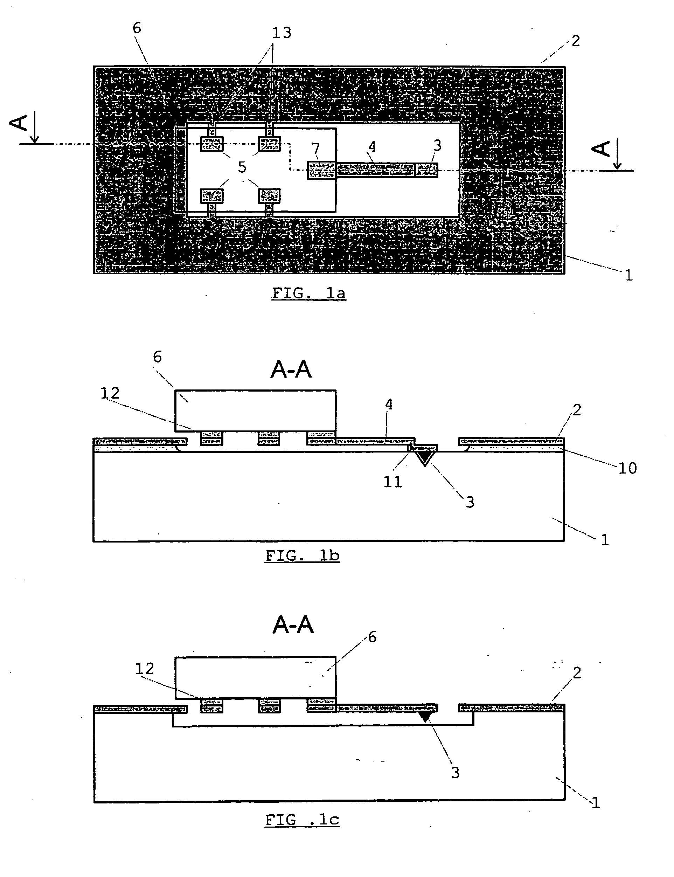

Figure 1b shows a first embodiment wherein a sacrificial layer 10 is applied before applying the probe layer 2. It is to be noted that the sacrificial layer is patterned prior to the application of the probe layer, so that a small area 11 around the tip is not covered by said sacrificial layer.

Then the probe layer 2 is applied on top of the sacrificial layer and subsequently patterned to obtain the bonding pads 5,7 and the cantilever 4, lying on top of the sacrificial layer 10. The patterning of the probe layer takes place in a known way, by applying resist and performing a lithography step. What is obtained after this step is the probe configuration, being still attached to the substrate and consisting of the pads 5 and 7, the cantilever 4 and the tip 3.

A bonding layer 12 may be applied to the bonding pads by plating, etching back or lift-off. Alternatively, the bonding layer can itself be a photosensitive layer, patterned directly by lithography. After formation of the bonding layer 12, the holder 6 is attached to said bonding layer 12. The bonding layer can also be applied to the holder, or to the pads and the holder. Alternatively, the bonding layer may be absent, and the holder may be attached directly to the bonding pads. After that, the under-etch takes place with the help of a release chemical, which may be a liquid or gas phase, i.e. vapour HF or a plasma, and which can flow in the gap between the substrate and the holder.

The result is shown in figure 1b. Underneath the pads 5 and the cantilever, the sacrificial layer 10 is etched away. Under the tip 3, the substrate is etched. The underetching of the pads, cantilever and tip can take place quickly due to the reduced area of the pads, allowing the release of the whole structure in a short time, thereby avoiding the risk of damaging the probe by a prolonged contact with the release chemical. In this embodiment, the pads 5 remain attached to the probe layer 2 through strips 13, which can be broken prior to the final removal of the probe structure.

Figure 1c shows an embodiment without the use of a sacrificial layer, and wherein the substrate 1 is underetched.

Figure 2 shows an embodiment, wherein the patterning of the probe layer is done in such a way that only a zone 20 around the pads 5 and the cantilever 4 is removed. In this embodiment, the bonding layer 12 provides the necessary distance between the holder 6 and the probe layer 2, allowing the release chemical to flow in the 'gutters' 20 around the bonding pads 5. The thickness of the bonding layer is therefore an important parameter in this embodiment. Also in the embodiment of figure 2, there are no strips 13 between the probe configuration and the substrate. However, such a connection is preferably obtained by not fully underetching the pads 5, as seen in the detail in figure 2. Small contact Si-areas 14 remain between the substrate and the probe configuration. The dimensions of the bonding pads and the etch times should be such that these contact areas are obtained. To obtain this effect, the pads are preferably much longer than wide and oriented in a <100> direction. After the under-etch, these areas 14 can be broken or the probe can be peeled off for a full removal. A similar process is possible using a sacrificial layer.

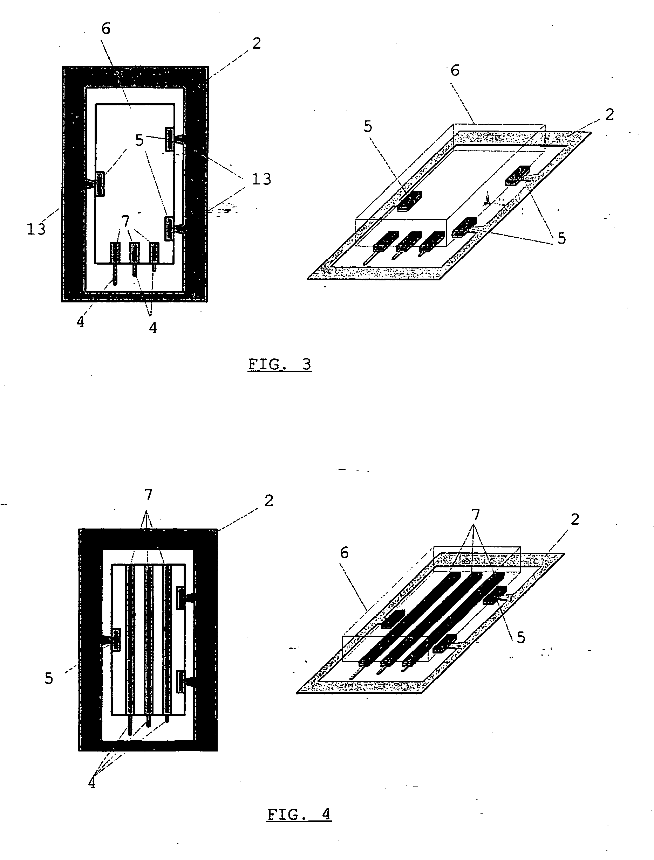

Figures 3 and 4 show other embodiments. In figure 3, a probe configuration comprising three probe tips is attached to one holder 6. Three bonding pads 7 are connected to the respective cantilevers 4, while three separate bonding pads 5 are present, connected to the substrate by breakable strips 13. Figure 4 shows a probe structure wherein the bonding pads 7 which are in connection with a probe cantilever and tip stretch over the full length of the contact region. Besides these, there are three small pads 5, connected to the probe layer by strips 13. The release chemical must flow into the long channels between the pads 7 in order to underetch the pads from the side.

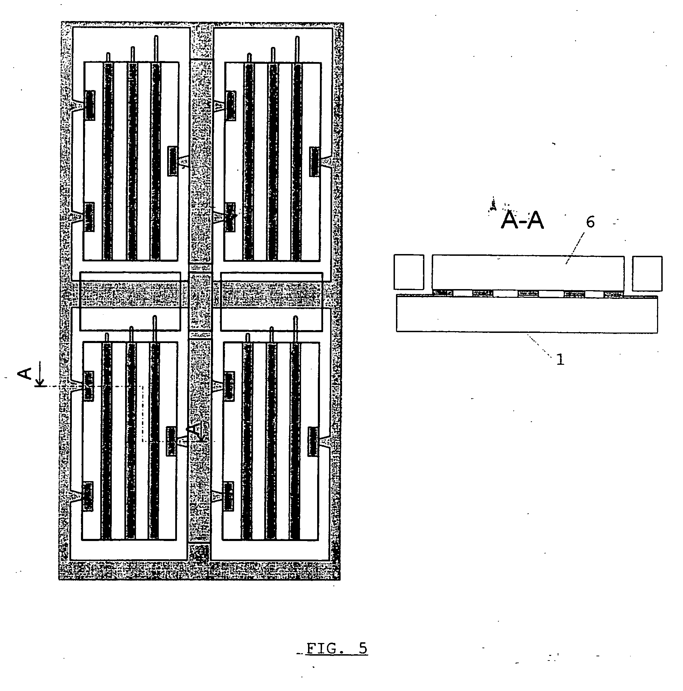

According to the preferred embodiment, the holders are not individually bonded to the probes. A full wafer is preferably bonded on top of a substrate whereon a plurality of probe configurations has been created. As shown in figure 5, this wafer is then diced to form individual holders before release.

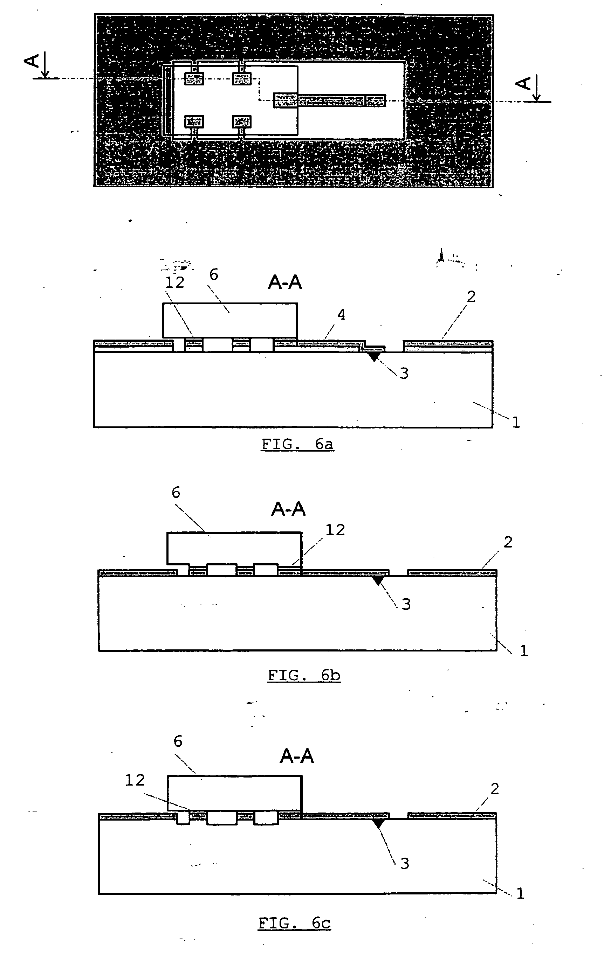

During release, the release chemical must flow between the gap formed between the substrate surface and the holder. Depending on the configuration, the height of this gap is either determined by the thickness of the bond 12 or the combined thickness of the bond 12 and the probe layer 2. Figure 6a shows an embodiment wherein a pre-etching of the sacrificial layer 10 is performed, prior to the holder attachment. Figure 6b shows an embodiment wherein a pre-etch of the holder is performed, while figure 6c shows an embodiment involving a pre-etch of the substrate. All embodiments of figures 6a to 6c are aimed at increasing the gap between the substrate surface and the holder, in order to facilitate the flow of release chemical into this gap.

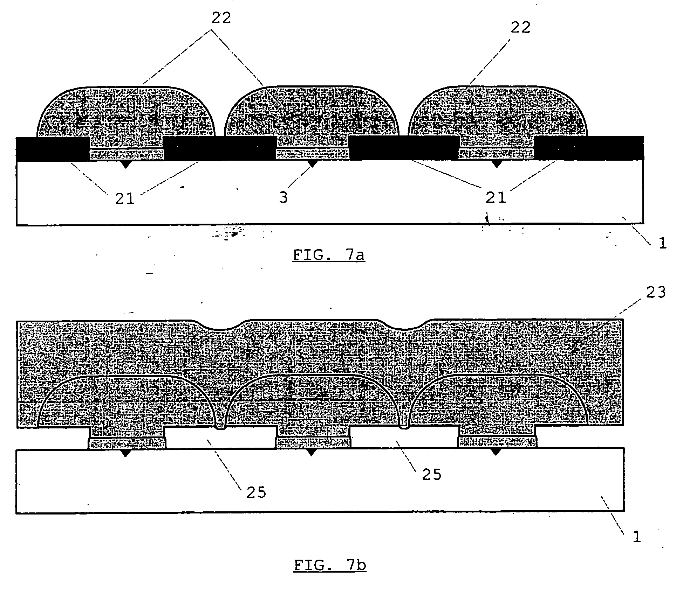

The present invention is equally related to other ways of producing AFM probes by releasing from the front side, after holder attachment. One embodiment in this respect is shown in figure 7, and involves the creation of holders by plating. The probe layer comprising the tip 3 and cantilever 4 is prepared as in the previous embodiments. In this case, the probe layer is patterned for a number of probes simultaneously so that it contains a number of long parallel pads separated by gaps, similar to the pattern shown in figure 4. However, the holder is not attached onto the pads, but a thick resist layer is applied on top of the probe configuration, and patterned so that areas 21 of resist remain in the gaps. The holder is then created by plating, for example a layer of Ni 22, on top of the probe configurations. The plating process is continued until the resist-filled gaps are almost sealed off, as shown in figure 7a. At this point, the resist is removed, leaving the gaps empty to create channels 25, and the plating is continued until a holder layer 23 is obtained. The channels allow the underetching of the probe configuration to take place in the above described way, by release chemical flowing into the channels and underetching the pads from the side.

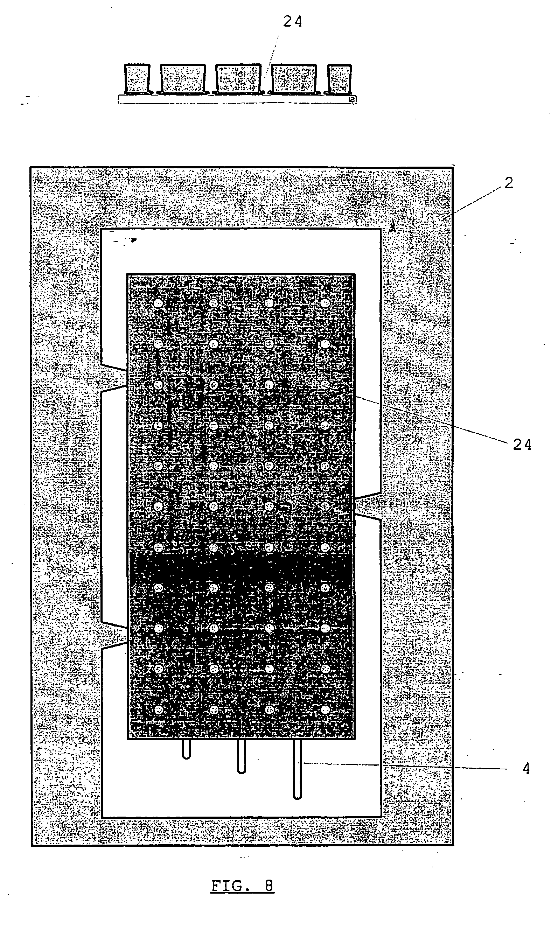

Another embodiment of the invention makes use of a holder or holder substrate comprising holes 24 through the thickness (see fig.8), bonded or formed in another way including plating, or thick resist patterning to a probe layer which is not necessarily patterned to comprise bonding pads, but which is patterned to have openings aligned with the holes in the holder. These openings equally have the effect of reducing the surface of the contact region so that this contact region is smaller than the surface area of the holder region which is to be attached to said contact region. The holes allow the flow of release chemical to said contact region between the holder and the probe configuration and consequently between the probe configuration and the sacrificial layer or the Si substrate, so that the contact region can be underetched and a release from the front side becomes possible.

### Description of possible embodiments of the invention

Preferably, the total contact region between the probe and the substrate after bonding is less than 0.5mm². However, it has been found that the method works well even with larger bonding pads, for example those shown in figure 4, even if very narrow channels are left. The substrate is preferably monocrystalline, preferably <100>, silicon.

The probe configuration may be created by applying a probe layer, for example a silicon nitride layer or a metal layer, and subsequently patterning this layer by known lithography techniques. The probe layer may also consist of silicon oxide, a plastic including SU-8 or a hardmetal.

Alternatively, the probe configuration may be obtained by a plating technique, by plating onto a previously patterned seed layer, or wherein a patterning step is performed on a resist layer, before plating the probe configuration selectively in the regions where there is no resist, and thereafter removing the resist. Another way is the damascene process, wherein the probe layer is plated onto a previously patterned resist layer, and subsequently polished, whereafter the resist is removed.

According to a specific embodiment of the invention, the probe layer can also be formed by implanting or diffusing impurities such as a dopant (such as boron) or another element such as carbon. Such a layer is etched more slowly (about 10 times for highly boron doped Si) in KOH than undoped Si. The Cantilever will then be patterned into the Si wafer (bulk micromachining). Such a probe layer would be underetched the same way as a deposited layer.

The holder may be silicon or glass in the case of a separately attached holder or holder substrate. For a holder applied by plating, Ni may be used, as described above in relation to figure 7. If a photosensitive polymer (resist) is used, photosensitive epoxy (SU-8) is the most reasonable. The holder may be active, meaning that it may incorporate active devices such as transistors.

The holder may be attached by solder bonding including SnPb, Sn, Ag, SnAg, SnCu, SnBi. It may be done using adhesive bonding including Epoxy (SU-8), Polyimide, BCB, anodic bonding or eutectic bonding. A holder may equally be created by spinning and patterning a thick resist layer.

According to the preferred embodiment, the shape of the bonding pads is such that no point on these pads is further than 300 µm away from the edge of the pad.

As a sacrificial layer can be used : silicon, porous silicon, Germanium, silicon oxide, Al, Ti, polymer, or others.

The underetching of the silicon substrate itself (fig. 1c) may be performed using an anisotropic etchant, such as KOH, TMAH, NaOH, NH₄OH, RbOH, CsOH, LiOH, ethylenediamine (EDP). The probe is preferably rotated with respect to the wafer north-south direction, and aligned with a <100> direction of the Si-substrate. The patterns may be aligned with the <100> direction while the probe is oriented in another direction.

Direct isotropic etching of the silicon substrate may be done by using an etchant based on nitric acid or HCl or other.

## Claims

1. A method for producing probes for Atomic Force Microscopy, comprising the steps of :
- providing a semiconductor substrate (1),
- producing on the surface of one side of the semiconductor substrate, one or more moulds, for the production of one or more probe tips,
- producing on said one side of the semiconductor substrate, one or more probe configurations, each configuration comprising a contact region for attachment of a holder, and in connection with said contact region at least one set of a probe tip (3) and a cantilever (4),
- attaching one or more holders (6) to each of the contact regions,
**characterized in that** :
- the surface area of each contact region is smaller in size than the surface area of the holder region which is to be attached to said contact region, and
- the method further comprises the step of releasing the structure comprising said probe configuration and said holder from the semiconductor substrate by under-etching said probe configuration from the side of the semiconductor substrate on which said probe configuration is produced, said under-etching step taking place after said step of attaching a holder.

2. The method according to claim 1, wherein said contact region comprises one or more bonding pads (5,7), the total surface area of said pads being smaller in size than the surface area of the holder region which is to be attached to said pads.

3. The method according to claim 2, wherein the size of said bonding pads is such that no point on the surface of a pad is further than 300µm away from the edge of the pad.

4. The method according to claim 2, wherein the pads are elongated and channels are formed between neighbouring pads.

5. The method according to claim 1, wherein said holder comprises a plurality of holes (24) for allowing release chemical to reach the contact region, and wherein said contact region is produced in such a way as to comprise a number of openings, which are aligned with said holes allowing underetching of said probe configuration.

6. The method according to claim 1 to 5, wherein the step of attaching a holder (6) takes place by bonding, the method further comprising the step of applying a bonding layer (12) to said contact region or holder or both, prior to attaching the holder.

7. The method according to any one of claims 1 to 6, wherein the height of the contact region or the combined height of the contact region and the bond layer (12) is sufficient to create a gap between the holder and the substrate, so as to allow release chemical to flow in between the holder and the substrate.

8. The method according to any one of the preceding claims, further comprising the step of applying a sacrificial layer (10) to said substrate (1), prior to creating the probe configuration (2).

9. The method according to any one of the preceding claims, wherein said holder is attached through the attachment of a holder substrate to a substrate comprising a plurality of probe configurations, and wherein said holder substrate is diced to form individual holders, said dicing step taking place before the step of releasing said holders.

10. An intermediate probe structure for atomic force microscopy, comprising:
a semiconductor substrate (1) with one or more moulds formed on the surface of one side of the semiconductor substrate, for the production of one or more probe tips;
one or more probe configurations formed on said one side of the semiconductor substrate, wherein each probe configuration comprises a contact region and at least one set of a probe tip (3) and a cantilever (4), and wherein each contact region comprises one or more bonding pads; and
one or more holders (6) attached to each of the contact regions,
**characterized in that** a combined surface area of the plurality of bonding pads is smaller than a surface area of the holder which is attached to the contact region, and wherein a height of the bonding pads is sufficient to allow a release chemical to flow, from said one side of the semiconductor substrate, into a gap between the holder and the semiconductor substrate.

## Patentansprüche

1. Verfahren zum Herstellen von Sonden für die Atomkraftmikroskopie, umfassend die Schritte:
- Bereitstellen eines Halbleitersubstrates (1),
- Herstellen auf der Oberfläche einer Seite des Halbleitsubstrates einer oder mehrerer Matrizen zur Herstellung einer oder mehrerer Sondenspitzen,
- Herstellen auf der einen Seite des Halbleitersubstrates einer oder mehrerer Sondenanordnungen, wobei jede Anordnung einen Kontaktbereich zum Anbringen einer Haltevorrichtung und in Verbindung mit dem Kontaktbereich mindestens einen Satz aus einer Sondenspitze (3) und einem Ausleger (4) umfasst,
- Anbringen einer oder mehrerer Haltevorrichtungen (6) an jedem der Kontaktbereiche,
**dadurch gekennzeichnet, dass**
- der Flächeninhalt jedes Kontaktbereiches kleiner ist als der Flächeninhalt des Haltevorrichtungsbereiches, der an dem Kontaktbereich angebracht werden soll, und
- das Verfahren ferner den Schritt des Ablösens der Struktur, welche die Sondenanordnung und die Haltevorrichtung umfasst, von dem Halbleitersubstrat durch Unterätzen der Sondenanordnung von der Seite des Halbleitersubstrates her, auf der die Sondenanordnung hergestellt wird, umfasst, wobei der Schritt des Unterätzens nach dem Schritt des Anbringens einer Haltevorrichtung erfolgt.

2. Verfahren nach Anspruch 1, wobei der Kontaktbereich ein oder mehrere Bindeplättchen (5, 7) umfasst und der Gesamtflächeninhalt der Plättchen kleiner ist als der Flächeninhalt des Haltevorrichtungsbereiches, der an den Plättchen angebracht werden soll.

3. Verfahren nach Anspruch 2, wobei die Bindeplättchen so groß sind, dass kein Punkt auf der Oberfläche eines Plättchens weiter als 300 µm von dem Rand des Plättchens entfernt ist.

4. Verfahren nach Anspruch 2, wobei die Plättchen gestreckt sind und zwischen benachbarten Plättchen Kanäle gebildet werden.

5. Verfahren nach Anspruch 1, wobei die Haltevorrichtung mehrere Löcher (24) umfasst, um zu ermöglichen, dass eine Ablösechemikalie den Kontaktbereich erreicht, und wobei der Kontaktbereich so hergestellt wird, dass er eine Anzahl von Öffnungen umfasst, die an den Löchern ausgerichtet sind, die das Unterätzen der Sondenanordnung ermöglichen.

6. Verfahren nach Anspruch 1 bis 5, wobei der Schritt des Anbringens einer Haltevorrichtung (6) durch Verbinden erfolgt und das Verfahren ferner den Schritt des Auftragens einer Bindeschicht (12) auf den Kontaktbereich oder die Haltevorrichtung oder auf beide umfasst, bevor die Haltevorrichtung angebracht wird.

7. Verfahren nach einem der Ansprüche 1 bis 6, wobei die Höhe des Kontaktbereiches oder die Höhe des Kontaktbereiches und der Bindeschicht (12) zusammen ausreicht, um zwischen der Haltevorrichtung und dem Substrat einen Spalt zu erzeugen, um so zu ermöglichen, dass eine Ablösechemikalie zwischen die Haltevorrichtung und das Substrat fließt.

8. Verfahren nach einem der vorhergehenden Ansprüche, ferner umfassend den Schritt des Auftragens einer Opferschicht (10) auf das Substrat (1), bevor die Sondenanordnung (2) erzeugt wird.

9. Verfahren nach einem der vorhergehenden Ansprüche, wobei die Haltevorrichtung durch das Anbringen eines Haltevorrichtungssubstrates auf ein Substrat, das mehrere Sondenanordnungen umfasst, angebracht wird und wobei das Haltevorrichtungssubstrat zur Bildung einzelner Haltevorrichtungen zu Scheibchen geschnitten wird, wobei der Schritt des Schneidens zu Scheibchen vor dem Schritt des Ablösens der Haltevorrichtungen erfolgt.

10. Halbfertig-Sondenstruktur für die Atomkraftmikroskopie, umfassend:
ein Halbleitersubstrat (1) mit einer oder mehreren Matrizen, die auf der Oberfläche einer Seite des Halbleitersubstrates gebildet sind, zur Herstellung einer oder mehrerer Sondenspitzen;
eine oder mehrere Sondenanordnungen, die auf der Seite des Halbleitersubstrates gebildet sind, wobei jede Sondenanordnung einen Kontaktbereich und mindestens einen Satz aus einer Sondenspitze (3) und einem Ausleger (4) umfasst und wobei jeder Kontaktbereich ein oder mehrere Bindeplättchen umfasst; und
eine oder mehrere Haltevorrichtungen (6), die an jedem der Kontaktbereiche angebracht sind,
**dadurch gekennzeichnet, dass** ein Flächeninhalt der mehreren Bindeplättchen zusammen kleiner ist als ein Flächeninhalt der Haltevorrichtung, die an dem Kontaktbereich angebracht ist, und wobei eine Höhe der Bindeplättchen ausreicht, um zu ermöglichen, dass eine Ablösechemikalie von der einen Seite des Halbleitersubstrates in einen Spalt zwischen der Haltevorrichtung und dem Halbleitersubstrat fließt.

## Revendications

1. Procédé pour produire des sondes pour microscopie à force atomique, comprenant les étapes suivantes :
- on fournit un substrat semi-conducteur (1),
- on produit, sur la surface d'un côté du substrat semi-conducteur, un ou plusieurs moules, pour la production d'une ou plusieurs pointes de sonde,
- on produit, sur ledit côté du substrat semi-conducteur, une ou plusieurs configurations de sondes, chaque configuration comprenant une région de contact pour fixation d'un support et, en connexion avec ladite région de contact, au moins un ensemble d'une pointe de sonde (3) et d'un cantilever (4),
- on fixe un ou plusieurs supports (6) sur chacune des régions de contact,
**caractérisé en ce que**:
- la surface de chaque région de contact a des dimensions plus petites que la surface de la région de support à fixer sur ladite région de contact et
- le procédé comprend en outre l'étape de libération de la structure comprenant ladite configuration de sonde et ledit support du substrat semi-conducteur par sous-gravure de ladite configuration de sonde par le côté du substrat semi-conducteur sur lequel ladite configuration de sonde est produite, ladite étape de sous-gravure se produisant après ladite étape de fixation d'un support.

2. Procédé selon la revendication 1, dans lequel ladite région de contact comprend un ou plusieurs plots de connexion (5,7), la surface totale desdits plots étant plus petite que la surface de la région de support qui doit être fixée auxdits plots.

3. Procédé selon la revendication 2, dans lequel la dimension desdits plots de connexion est telle qu'aucun point sur la surface d'un plot n'est à plus de 300 µm du bord du plot.

4. Procédé selon la revendication 2, dans lequel les plots sont allongés et des canaux sont formés entre des plots voisins.

5. Procédé selon la revendication 1, dans lequel ledit support comprend une pluralité de trous (24) pour permettre à un produit chimique anti-adhérent d'atteindre la région de contact et dans lequel ladite région de contact est produite de manière à comprendre un certain nombre d'ouvertures, qui sont alignées avec lesdits trous, permettant la sous-gravure de ladite configuration de sonde.

6. Procédé selon les revendications 1 à 5, dans lequel l'étape de fixation d'un support (6) est effectuée par connexion, le procédé comprenant en outre l'étape d'application d'une couche de connexion (12) à ladite région de contact ou au support ou aux deux avant de fixer le support.

7. Procédé selon l'une quelconque des revendications 1 à 6, dans lequel la hauteur de la région de contact ou la hauteur combinée de la région de contact et de la couche de connexion (12) suffit à créer un intervalle entre le support et le substrat de manière à permettre à un produit chimique anti-adhérent de s'écouler entre le support et le substrat.

8. Procédé selon l'une quelconque des revendications précédentes, comprenant en outre l'étape d'application d'une couche sacrificielle (10) sur ledit substrat (1) avant la création de la configuration de sonde (2).

9. Procédé selon l'une quelconque des revendications précédentes, dans lequel ledit support est fixé par fixation d'un substrat de support sur un substrat comprenant une pluralité de configurations de sondes et dans lequel ledit substrat de support est découpé en dés pour former des supports individuels, ladite étape de découpe en dés se produisant avant l'étape de libération desdits supports.

10. Structure de sonde intermédiaire pour la microscopie à force atomique, comprenant :
un substrat semi-conducteur (1) avec un ou plusieurs moules formés sur la surface d'un côté du substrat semi-conducteur pour la production d'une ou plusieurs pointes de sonde;
une ou plusieurs configurations de sondes formées sur ledit côté du substrat semi-conducteur, dans laquelle chaque configuration de sonde comprend une région de contact et au moins un ensemble constitué d'une pointe de sonde (3) et d'un cantilever (4) et dans laquelle chaque région de contact comprend un ou plusieurs plots de connexion; et
un ou plusieurs supports (6) fixés sur chacune des régions de contact,
**caractérisée en ce qu'**une surface combinée de la pluralité de plots de connexion est plus petite qu'une surface du support qui est fixée sur la région de contact et dans laquelle une hauteur des plots de connexion suffit à permettre à un produit chimique anti-adhérent de s'écouler dudit côté du substrat semi-conducteur dans un intervalle entre le support et le substrat semi-conducteur.
